# EUROPÄISCHE PATENTSCHRIFT

(11) **EP 1 138 426 B1**
(45) Veröffentlichungstag und Bekanntmachung des Hinweises auf die Patenterteilung: **30.03.2005**
(21) Anmeldenummer: 01103710.8
(22) Anmeldetag: 15.02.2001
(51) Int. Cl.: B23D 33/08

(54) **Rohrschneidemaschine**
Pipe cutting machine
Machine à couper des tuyaux

(30) Priorität: 28.03.2000 DE 10015367
(43) Veröffentlichungstag der Anmeldung: 04.10.2001
(73) Patentinhaber: VAI SEUTHE GmbH, 58675 Hemer (DE)
(72) Erfinder: Grewe, Andreas, 58708 Menden (DE); Hiestermann, Hartwig, 58644 Iserlohn (DE); Otto, Michael, 58638 Iserlohn (DE)
(74) Vertreter: Schröter & Haverkamp

(56) Entgegenhaltungen:
- EP-A- 0 391 747
- DE-U- 6 918 151
- US-A- 3 099 182
- US-A- 5 224 368

## Beschreibung

Die Erfindung betrifft eine Rohrschneidemaschine mit den Merkmalen des Oberbegriffs des Patentanspruchs 1.

Derartige Rohrschneidemaschinen werden eingesetzt, um aus einer größeren Rohrlänge bezüglich ihre Länge konfektionierte Rohrabschnitte zu bilden. Beispielsweise ist eine Rohrschneidemaschine am Ende einer Rohrschweißanlage zum Herstellen längsnahtgeschweißter Rohre angeordnet.

Eine Rohrschneidemaschine der eingangs genannten Art ist aus der DE 36 41 886 A1 bekannt. Diese vorbekannte Rohrschneidemaschine besteht aus einer Schneideeinrichtung mit einem im vertikaler Richtung bewegbaren und maschinell angetriebenen Messer zum Zerteilen des Rohres. Die Schneide eines solchen Messers ist aus zwei Abschnitten gebildet, die eine Spitze einschließen, wobei die beiden Abschnitte der Schneide konkav verlaufend ausgebildet sind. Ferner umfaßt eine solche Rohrschneidemaschine eine Spanneinrichtung zum Einspannen des zu zerschneidenden Rohres. Die Spanneinrichtung umfaßt zwei mit Abstand voneinander angeordnete Spannvorrichtungen, die jeweils zwei Spannbacken aufweisen. Zwischen den beiden Spannvorrichtungen ist ein enger Schneidspalt belassen, in den das Messer zum Zerschneiden des Rohres einfahrbar ist. Die beiden Spannbacken einer jeden Spannvorrichtung sind in einer horizontalen Ebene zueinander bewegbar angeordnet, wobei die rechtwinklig zur Spannrichtung der Spannbacken verlaufende Einspannebene fluchtend mit der Spitze des Messers bezogen auf die Bewegungsrichtung des Messers vorgesehen ist.

In den Schneidspalt eingreifend ist ferner ein Quermesser, mit dem die Oberseite des Rohres angeritzt bzw. eingeschnitten wird, bevor das Messer mit seiner Schneide in den Schneidspalt zum vollständigen Zerteilen des Rohres eingefahren wird.

Bei dem Schneidvorgang zum Abtrennen eines Rohrabschnittes tritt im Bereich der Unterseite des Rohres, in der die Spitze des Messers durch die Unterseite des Rohres hindurchtritt, eine nach außen gerichtete wulstartige Verformung des Rohres ein. Begründet liegt dies insbesondere darin, daß die auf die innere Oberfläche auftreffende Spitze auf eine nicht zuvor angeritzte oder vorgeschnittene Oberfläche trifft, wie dies bei der oberen äußeren Rohroberfläche durch das Quermesser der Fall ist. Infolge dieser unvermeidbaren Deformation der Enden der abgeschnittenen Rohrabschnitte mußten je nach vorgesehener Anwendung des Rohrabschnittes die deformierten Enden nachträglich abgesägt werden. Daher werden die in Rede stehenden Rohrschneidemaschinen bevorzugt dort eingesetzt, wo es auf ein rasches Konfektionieren bzw. Vorkonfektionieren von Rohrabschnitten ankommt, wie beispielsweise am Ende einer Rohrschweißanlage, mit der längsnahtgeschweißte Rohre hergestellt werden. Ein Erstellen von Rohrabschnitten durch einen Sägeprozeß hat neben dem Nachteil der wesentlich längeren Zerteilungszeit auch den Nachteil, daß die Stirnflächen der Rohrabschnitte Sägespuren zeigen und sich innerhalb des Rohres Sägespäne befinden, die gegebenenfalls noch von dem Rohrabschnitt abgetrennt werden müssen, falls diese anhängen.

Zur Vermeidung des Problems einer Deformation der Rohrunterseite bei dem Einsatz eines einzigen Schneidmessers ist eine Rohrschneidemaschine - wie in DE 44 21 811 C2 beschrieben - entwickelt worden, bei der anstelle eines einzigen Schneidmessers zwei einander diametral gegenüberliegende Schneidmesser eingesetzt sind. Entsprechend weist diese Rohrschneidemaschine auch jeweils ein jedem Schneidmesser zugeordnetes Quermesser zum Anritzen und Aufschneiden der jeweiligen Rohroberseite, um das Eindringen der Messerspitze in das Rohrinnere jeweils zu ermöglichen. Zwar ist mit einer solchen Rohrschneidemaschine eine Deformation an der Rohrunterseite vermieden, da diese ebenso wie die Rohroberseite zerteilt wird, jedoch bedarf es eines nicht unerheblichen maschinellen Mehraufwandes, um die beiden Messer entsprechend getaktet antreiben zu können. Überdies ist es notwendig, die beiden eingesetzten Schneidmesser in ihrer Ebene exakt miteinander fluchtend anzuordnen, um ein glattes Schneidergebnis zu erzielen. Eine solche Justage ist jedoch aufwendig, da auch die Führungsmechanik zum Führen und Antreiben der Schneidmesser in diese Justage mit eingezogen werden muß.

Eine weitere Rohrschneidemaschine ist aus EP 0 391 747 A bekannt. Diese Rohrschneidemaschine weist ein einziges Messer auf, mit dem das zu zerteilende Rohr angeritzt und anschließend zerteilt wird. Zu diesem Zweck ist das Messer in zwei Bewegungsachsen beweglich in einer Führungskulisse geführt. Zum Anritzen des zu zerteilenden Rohres wird das Messer zunächst in vertikaler Richtung nach unten bewegt, bis die Spitze in das Rohrinnere eingetaucht ist. Anschließend wird die Bewegungsrichtung umgelenkt, so dass das Messer dann in einer diagonalen Richtung bewegt wird, um das Rohr zu zerteilen. Das zu zerteilende Rohr ist in einer Spanneinrichtung zum Abtrennen eines Rohrabschnittes gehalten. Hinweise darauf, wie eine Deformation der Rohrunterseite beim Austritt des Messers entgegengewirkt werden könnte, sind in diesem Dokument jedoch nicht enthalten, da der Schwerpunkt und die Zielrichtung des Gegenstandes dieses Dokumentes die Steuerung und Führung des in den beiden oben genannten Richtungen bewegbaren Messers betreffen.

Aus DE 69 18 151 U ist eine Rohrschneidemaschine bekannt, bei der die Messerspitze außermittig und somit neben dem Scheitel des zu zerteilenden Rohres auf die Oberseite des Rohres auftrifft. Dieses erfolgt vor dem Hintergrund, dass eine Deformation bei Einschneiden der Spitze in die Oberseite des Rohres nach der Lehre dieses Dokumentes dann verhindert ist, wenn die Spitze außerhalb des Scheitels des Rohres in das zu zerteilende Rohr eindringt. Ferner soll eine Deformation des zu zerteilenden Rohres dadurch verhindert werden, dass die Spanneinrichtung zum Halten des Rohres an die Bewegung des Messers dergestalt gekoppelt ist, dass diese beim Absenken des Messers zum Fixieren des Rohres zwangsgeschlossen wird. Die Ausbildung der Spanneinrichtung erfolgt auch vor dem Hintergrund, das zu zerteilende Rohr sicher und insbesondere verdrehsicher zu fixieren. Dieses setzt jedoch voraus, dass bei den über die Spanneinrichtung auf das zu zerteilende Rohr einwirkenden Spannkräfte das Rohr diesen stand hält und nicht durch die Spanneinrichtung deformiert wird. Gleichwohl nimmt der in diesem Dokument offenbarte Gegenstand Nachteile in Kauf, die sich bei einem außermittigen Auftreffen der Spitze des Messers auf das zu zerteilende Rohr einstellen.

Diese liegen darin begründet, dass bei einem außermittigen Auftreffen der Messerspitze auf das zu zerteilende Rohr die Führungen einseitig beansprucht werden. Darüber hinaus ist sicherzustellen, dass die Spanneinrichtung das zu zerteilende Rohr ausreichend fixiert, um ein Verdrehen des Rohres innerhalb der Spanneinrichtung zu verhindern.

Ausgehend von diesem diskutierten Stand der Technik liegt der Erfindung daher die Aufgabe zugrunde, eine eingangs genannte gattungsgemäße Rohrschneidemaschine dergestalt weiterzubilden, bei der nicht nur die Nachteile von solchen vorbekannten Rohrschneidemaschinen, bei denen zum Vermeiden einer Rohrdeformation die Messerspitze außermittig in das Rohr einschneidet, sondern auch die zu DE 36 41 886 A1 beschriebenen vermieden sind.

Diese Aufgabe wird erfindungsgemäß dadurch gelöst, daß im Bereich der durch die Bewegungsrichtung des Messers definierten Bewegungsbahn der Spitze des Messers im Bereich seines Austritts aus einem zerteilten Rohr bei jeder Spannvorrichtung eine Spannbacke oder ein Teil einer Spannbacke als Widerlager für das die Rohrunterseite zerteilende Messer angeordnet ist.

Bei der erfindungsgemäßen Rohrschneidemaschine ist eine Deformation im unteren Bereich des Rohres bei einem Schneidvorgang mit nur einem Schneidmesser dadurch verhindert, daß im Bereich der durch die Bewegungsrichtung des Messers definierten Bewegungsbahn der Spitze der Schneide ein Widerlager durch eine Spannbacke bzw. durch einen Teil einer Spannbacke entgegengestellt ist. Eine Deformation des Rohrendes beim Schneidvorgang ist mangels Raum nicht möglich. Auf diese Weise ist ein deformationsfreies Abschneiden von Rohrabschnitten von einem Rohr möglich, auch ohne die innere Oberfläche des Rohres vorschneiden bzw. anritzen zu müssen, um auf diese Weise einer Deformation vorzubeugen.

Beim Gegenstand der beanspruchten Rohrschneidemaschine weist jede Spannvorrichtung zumindest zwei gegeneinander bewegbare Spannbakken auf. Ebenfalls können Spannvorrichtungen eingesetzt sein, die mehr als zwei Spannbacken, beispielsweise drei oder vier umfassen, deren Spannbacken sternförmig bewegbar sind. Wesentlich ist, daß im Bereich der Bewegungsbahn bzw. der Flucht der Spitze des Messers durch eine Spannbacke bzw. ein Spannbackenteil ein Wiederlager und kein Spannspalt vorgesehen ist.

In einer bevorzugten Ausgestaltung weist jede Spannvorrichtung zwei Spannbacken auf, wobei die rechtwinklig zur Spannrichtung der Spannbacken verlaufende Einspannebene winklig zur Bewegungsrichtung des Messers angeordnet ist, was sich beispielsweise durch eine schräge Anordnung der Spannvorrichtung gegenüber dem Grundgestell der Rohrschneidemaschine auf einfache Weise realisieren läßt.

Weitere Ausgestaltungen der Erfindung ergeben sich aus der nachfolgenden Beschreibung von Ausführungsbeispielen unter Bezugnahme auf die beigefügten Figuren. Es zeigen:
- **Fig. 1a:**: Eine Ansicht einer Rohrschneidemaschine,
- **Fig. 1b:**: einen vergrößerten Ausschnitt der Rohrschneidemaschine der Figur 1a im Bereich seiner Spanneinrichtung,
- **Fig. 2:**: eine schematisierte Darstellung des Messers sowie der Anordnung der Spannvorrichtungen der Rohrschneidemaschine der Figur 1,
- **Fig. 3:**: eine schematisierte Darstellung entsprechend der Figur 2, jedoch als Vergleich bei einer Rohrschneidemaschine gemäß dem vorbekannten Stand der Technik und
- **Fig. 4:**: eine schematisierte Darstellung entsprechend Figur 2 unter Einsatz einer weiteren Spannvorrichtung.

Eine Rohrschneidemaschine 1 umfaßt ein Gestell 2, gebildet im wesentlichen durch eine Grundplatte 3, eine obere Platte 4, die über vier Führungssäulen 5 mit der Grundplatte 3 verbunden ist. Geführt an den Führungssäulen 5 ist eine Schneidplatte 6, von der nach unten abragend ein Messer 7 angeordnet ist. Die Schneidplatte 6 steht mit einer Antriebseinrichtung 8 im Eingriff, durch die die Schneidplatte 6 und somit das Messer 7 in vertikaler Richtung nach unten bewegt werden kann. Zu diesem Zweck ist die Schneidplatte 6 über Buchsen 9 an den Führungssäulen 5 geführt.

Das Messer 7 weist eine Schneide 10 auf, die durch zwei einzelne Abschnitte 11, 12 gebildet ist. Die Abschnitte 11, 12 schließen in der geometrischen Mitte der Schneide 10 eine Spitze 13 ein und sind konkav gewölbt ausgebildet.

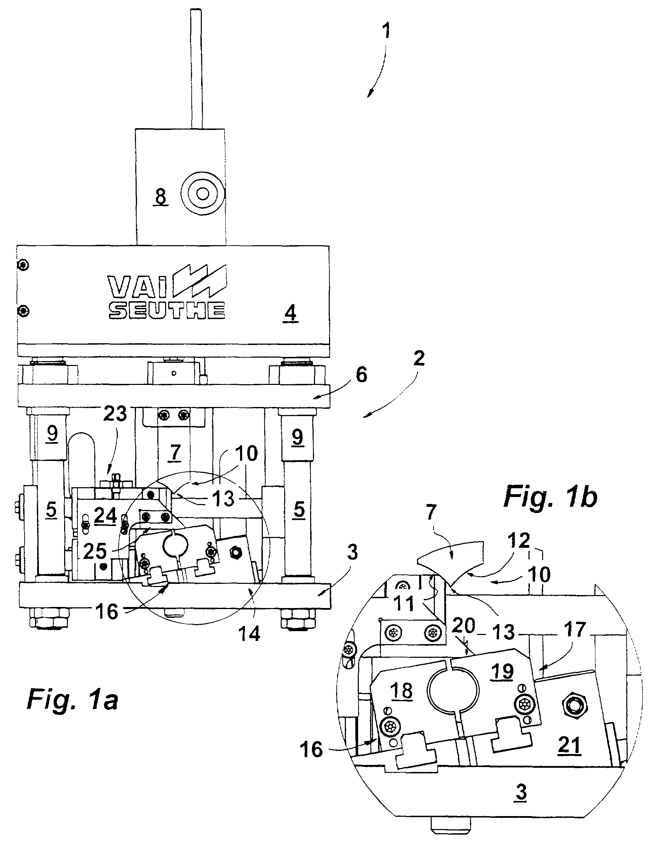

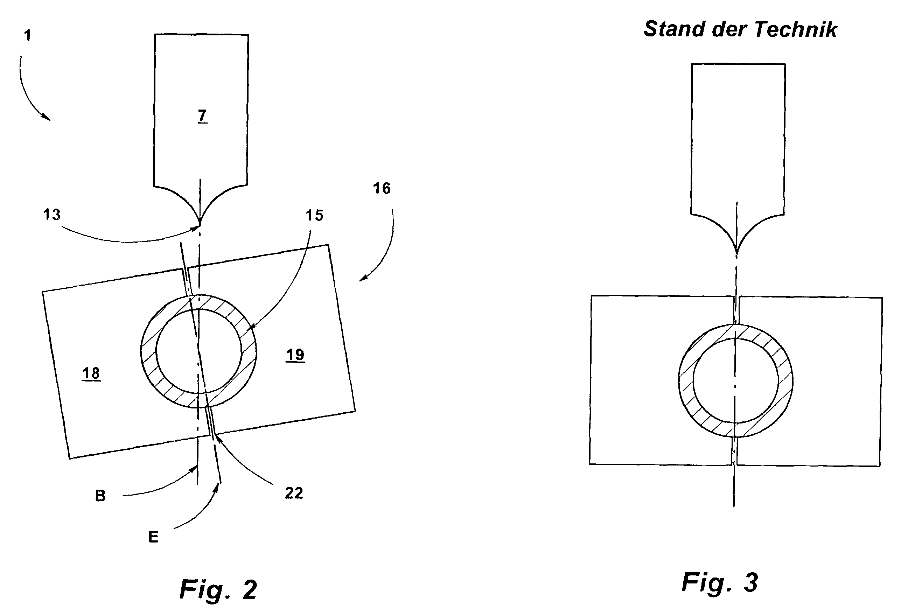

Aufbauend auf der Grundplatte 3 ist eine Spanneinrichtung 14 zum Einspannen eines zu zerschneidenden Rohres 15 (vgl. Figur 2) angeordnet. Das Rohr 15 ist in der Spanneinrichtung 14 im eingespannten Zustand mit seinem oberen Scheitel fluchtend in der Bewegungsrichtung des Messers 7 unterhalb der Spitze 13 eingespannt gehalten. Die Spanneinrichtung 14 umfaßt zwei Spannvorrichtungen 16, 17, bestehend jeweils aus zwei einzelnen miteinander zusammenwirkenden Spannbacken 18, 19, von denen in den Figuren 1a und 1b lediglich die Spannbacken der vorderen Spannvorrichtung 16 der Übersicht halber mit Bezugszeichen gekennzeichnet sind. Die Spannvorrichtungen 16, 17 sind mit Abstand zueinander angeordnet und belassen zwischen sich einen Schneidspalt 20 durch den das Messer 7 zum Abschneiden des vorderen Rohrabschnittes hindurchtreten kann. Die beiden Spannvorrichtungen 16, 17 sind auf einem Bock 21 angeordnet, der schräg zur horizontalen Ausrichtung der Grundplatte 3 angeordnet ist. Infolge dieser schrägen Anordnung des Bockes 22 ist die Ebene E des notwendigerweise zwischen den Spannbacken 18, 19 verbleibenden Spannspaltes 22 gegenüber der Bewegungsrichtung des Messers 7 geneigt, so daß fluchtend unterhalb der Spitze 13 des Messers 7 der untere Teil der Spannbacke 18 als Widerlager für das Messer 7, insbesondere für seine Spitze 13 angeordnet ist.

Diese Anordnung der Spannbacken 18, 19 mit dem verbleibenden Spannspalt 22 ist zur Verdeutlichung nochmals schematisiert in Figur 2 dargestellt. Die vertikale Bewegungsachse des Messers 7 ist in dieser Figur strichpunktiert und mit dem Bezugszeichen B gekennzeichnet. Erkennbar in der Darstellung der Figur 2 ist, daß die Bewegungsbahn B der Spitze 13 des Messers beim Einstechen in die Unterseite des Rohres 15 in dem unteren Teil der Spannbacke 18 ein Widerlager findet, so daß eine Deformation der beiden voneinander getrennten Rohrabschnitte verhindert ist.

Zur Gegenüberstellung des von dem Gegenstand der Erfindung verwirklichten Prinzips zum vorbekannten Stand der Technik ist in Figur 3 eine schematisierte Darstellung einer Rohrschneidemaschine gemäß dem Stand der Technik wiedergegeben. Die Darstellung zeigt die fluchtende Anordnung der Ebene des Spannspaltes mit der Bewegungslinie B der Spitze des Messers.

Der Rohrschneidemaschine 1 ist ferner eine Anritzeinrichtung 23 mit einem quer zur Bewegungsrichtung des Messers 7 maschinell verfahrbaren Schlitten 24, auf dem ein hakenförmiges Messer 25 angeordnet ist. Das Messer 25 dient zum Einschneiden der oberen Oberfläche des Rohres 15 bevor das tatsächliche Abschneiden des Rohrstückes mit dem Messer 7 erfolgt. Dieses Voranschneiden der oberen Oberfläche des Rohres 15 dient zur Vorbeugung von Deformationen, die ansonsten beim Auftreffen der Spitze 13 auf die Scheitelfläche des Rohres 15 eintreten würden.

Bei dem Ausführungsbeispiel der Figuren 1 und 2 ist die Spanneinrichtung 14 zwangsgeführt und maschinell angetrieben, so daß ein Spannen und Lösen des Rohres 15 im Bearbeitungstakt der Rohrschneidemaschine 1 erfolgt.

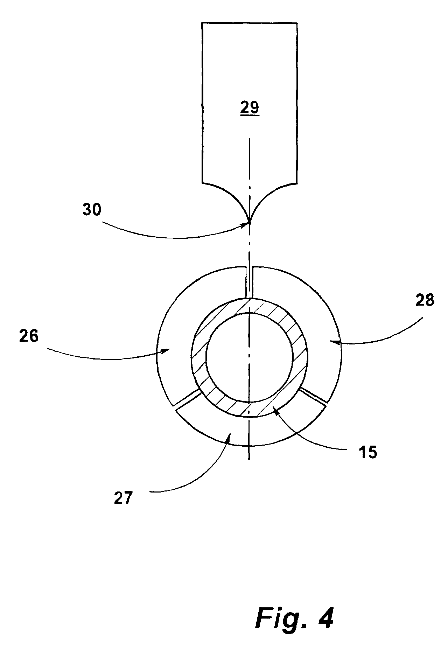

Figur 4 zeigt schematisiert ein weiteres Ausführungsbeispiel einer Rohrschneidemaschine, bei der im Gegensatz zu dem Ausführungsbeispiel der Figuren 1 und 2 die Spannvorrichtungen jeweils drei Spannbacken 26 - 28 aufweisen, die sternförmig voneinander wegbewegbar sind. Auch bei diesem Ausführungsbeispiel wird durch die Anordnung der Spannbacken 27 deutlich, daß in der Flucht der Bewegungsbahn des Messers 29, insbesondere seiner Spitze 30 ein Spannspalt an der Rohrunterseite nicht vorhanden ist, so daß auch bei diesem Ausführungsbeispiel eine Rohrdeformation wie beim vorbekannten Stand der Technik nicht erfolgt.

Aus der Beschreibung der Erfindung wird deutlich, daß mit einfachen Mitteln eine vorbekannte Rohrschneidemaschine bereitgestellt oder auch umgerüstet werden kann, damit mit dieser ein sauberer Rohrabschnitt ohne der Notwendigkeit einer aufwendigen Nacharbeitung erfolgen kann.

### Zusammenstellung der Bezugszeichen

- 1: Rohrschneidemaschine
- 2: Gestell
- 3: Grundplatte
- 4: obere Platte
- 5: Führungssäule
- 6: Schneidplatte
- 7: Messer
- 8: Antriebseinrichtung
- 9: Buchse
- 10: Schneide
- 11: Abschnitt der Schneide
- 12: Abschnitt der Schneide
- 13: Spitze
- 14: Spanneinrichtung
- 15: Rohr
- 16: Spannvorrichtung
- 17: Spannvorrichtung
- 18: Spannbacke
- 19: Spannbacke
- 20: Schneidspalt
- 21: Bock
- 22: Spannspalt
- 23: Anritzeinrichtung
- 24: Schlitten
- 25: Messer
- 26: Spannbacke
- 27: Spannbacke
- 28: Spannbacke
- 29: Messer
- 30: Spitze

- B: Bewegungsbahn der Spitze
- E: Ebene des Spannspaltes

## Patentansprüche

1. Rohrschneidemaschine mit einer Schneideinrichtung umfassend ein einziges, maschinell betätigbares Messer (7, 29) zum Zerteilen eines Rohres, mit einer Schneide (10) aus zwei Abschnitten (11, 12) und aus einer mittig bezüglich der Schneidenbreite angeordneten Spitze (13, 30) sowie mit einer Spanneinrichtung (14) zum Einspannen eines Rohres, welche Spanneinrichtung (14) zwei Spannvorrichtungen (16, 17) mit jeweils zumindest zwei, mit Abstand zueinander angeordneten und einen Schneidspalt (20) bildenden Spannbacken (18, 19; 26, 27, 28) aufweist, in welcher Spanneinrichtung (14) das darin eingespannte Rohr (15) mit seinem oberen Scheitel fluchtend in der Bewegungsbahn (B) der Spitze (13, 30) gehalten ist, **dadurch gekennzeichnet, dass** im Bereich der durch die Bewegungsrichtung des Messers (7, 29) definierten Bewegungsbahn (B) der Spitze (13, 30) des Messers (7, 29) im Bereich seines Austritts aus einem zerteilten Rohr bei jeder Spannvorrichtung (16, 17) eine Spannbacke (18, 19; 26, 27, 28) oder ein Teil einer Spannbacke (18, 19; 26, 27, 28) als Widerlager für das die Rohrunterseite zerteilende Messer (7, 29) angeordnet ist.

2. Rohrschneidemaschine nach Anspruch 1, **dadurch gekennzeichnet, daß** jede Spannvorrichtung (16, 17) zwei Spannbacken (18, 19) aufweist, wobei die rechtwinklig zur Spannrichtung der Spannbacken (18, 19) verlaufende Einspannebene winklig zur Bewegungsrichtung des Messers (7) angeordnet ist.

3. Rohrschneidemaschine nach Anspruch 2, **dadurch gekennzeichnet, daß** die Spanneinrichtung (14) geneigt zu einer Grundplatte (3) der Rohrschneidemaschine (1) angeordnet ist.

4. Rohrschneidemaschine nach einem der Ansprüche 1 bis 3, **dadurch gekennzeichnet, daß** die Spannbacken (18, 19) zwangsgeführt und maschinell im Takte der Rohrschneidemaschine (1) angetrieben sind.

## Claims

1. Pipe-cutting machine, having a cutting device comprising a single mechanically actuatable blade (7, 29) for severing a pipe, having a cutter (10) made of two portions (11, 12) and made of a tip (13, 30), which is disposed centrally relative to the cutting width, and also having a clamping device (14) for clamping a pipe, which clamping device (14) has two clamping devices (16, 17) with respectively at least two clamping jaws (18, 19; 26, 27, 28), which are disposed at a spacing from each other and form a cutting gap (20), in which clamping device (14) the therein clamped pipe (15) is held aligned in the movement track (B) of the tip (13, 30) by its upper apex, **characterised in that**, in the region of the movement track (B) of the tip (13, 30) of the blade (7, 29), which is defined by the direction of movement of the blade (7, 29), in the region of its emergence from a severed pipe, one clamping jaw (18, 19; 26, 27, 28) or one part of a clamping jaw (18, 19; 26, 27, 28) is disposed, in the case of each clamping device (16, 17), as abutment for the blade (7, 29) which is severing the pipe underside.

2. Pipe-cutting machine according to claim 1, **characterised in that** each clamping device (16, 17) has two clamping jaws (18, 19), the clamping plane, which extends at right-angles to the clamping direction of the clamping jaws (18, 19), being disposed at an angle relative to the direction of movement of the blade (7).

3. Pipe cutting machine according to claim 2, **characterised in that** the clamping device (14) is disposed inclined relative to a baseplate (3) of the pipe-cutting machine (1).

4. Pipe-cutting machine according to one of the claims 1 to 3, **characterised in that** the clamping jaws (18, 19) are driven in a restrained manner and mechanically in the cycle of the pipe-cutting machine (1).

## Revendications

1. Machine à couper des tuyaux avec un dispositif de coupe comportant une lame (7, 29) unique, actionnable mécaniquement, afin de sectionner un tuyau à l'aide d'un tranchant (10) comportant deux tronçons (11, 12) et une pointe (13, 30) disposée de manière centrée si l'on se réfère à la largeur du tranchant, comportant également un équipement de serrage (14) afin d'enserrer un tuyau, lequel équipement de serrage (14) présente deux dispositifs de serrage (16, 17) avec au moins deux mâchoires de serrage (18, 19 ; 26, 27, 28) disposées à distance l'une de l'autre et formant une fente de coupe (20), équipement de serrage (14) dans lequel est maintenu le tuyau (15) qui y est enserré avec son sommet supérieur aligné dans la trajectoire (B) de la pointe (13, 30) **caractérisée par le fait** de disposer au niveau de la trajectoire (B) - définie par le sens de déplacement de la lame (7, 29) - de la pointe (13, 30) de la lame (7, 29), au niveau de son extraction d'un tuyau sectionné, une mâchoire de serrage (18, 19 ; 26, 27, 28) ou une partie d'une mâchoire de serrage (18, 19 ; 26, 27, 28) pour chaque dispositif de serrage (16, 17), laquelle fait office de butée pour la lame (7, 29) sectionnant la face inférieure du tuyau.

2. Machine à couper des tuyaux selon la revendication 1 **caractérisée en ce que** chaque dispositif de serrage (16, 17) présente deux mâchoires de serrage (18, 19), alors que le plan de serrage s'étendant perpendiculairement au sens de serrage des mâchoires de serrage (18, 19) est disposé selon un certain angle par rapport au sens de déplacement de la lame (7).

3. Machine à couper des tuyaux selon la revendication 2 **caractérisée en ce que** l'équipement de serrage (14) est disposé de manière inclinée par rapport à la plaque de base (3) de la machine à couper des tuyaux (1).

4. Machine à couper des tuyaux selon l'une des revendications 1 à 3 **caractérisée en ce que** les mâchoires de serrage (18, 19) sont entraînées mécaniquement et par guidage forcé, selon la cadence de la machine à couper des tuyaux (1 ).
